# EUROPÄISCHE PATENTSCHRIFT

(11) **EP 0 756 964 B1**
(45) Veröffentlichungstag und Bekanntmachung des Hinweises auf die Patenterteilung: **24.10.2001**
(21) Anmeldenummer: 96111901.3
(22) Anmeldetag: 24.07.1996
(51) Int. Cl.: B60N 2/48

(54) **Umlegbare Kopfstütze, insbesondere für Kraftfahrzeuge**
Tiltable headrest for automotive vehicles
Appui-tête rabattable pour véhicules automobiles

(30) Priorität: 03.08.1995 DE 19528456
(43) Veröffentlichungstag der Anmeldung: 05.02.1997
(73) Patentinhaber: ADAM OPEL AG, 65423 Rüsselsheim (DE)
(72) Erfinder: Leuchtmann, Andrew, Dipl.-Ing., 55595 Mandel (DE)

(56) Entgegenhaltungen:
- EP-A- 0 447 150
- DE-A- 3 129 063
- DE-A- 3 605 774

## Beschreibung

Die Erfindung betrifft eine umlegbare Kopfstütze, insbesondere für einen eine Rückenlehne aufweisenden Kraftfahrzeugsitz mit den im Oberbegriff des Patentanspruchs 1 angegebenen Merkmalen.

Eine solche Kopfstütze ist aus der DE 36 05 774 A1 bekannt. Bei dieser Kopfstütze ist die jeweilige Tragstange mit einem Drehgelenk ausgebildet, welches einen oberen, mit der Kopfstütze verbundenen Stangenabschnitt und einen unteren, in eine Führungshülse an der Rückenlehne einschiebbaren Stangenabschnitt miteinander verbindet. Nachteilig dabei ist, daß zur Verriegelung der Kopfstütze in der Gebrauchslage das Drehgelenk und ein Teil des oberen Stangenabschnittes ebenfalls in die Führungshülse eingeschoben werden müssen. Außerdem ist bei einer derartigen Ausbildung - bedingt durch die Form und die Abmessungen der Führungshülse - die Festigkeit der Tragstange im Bereich des Drehgelenkes wesentlich verringert.

Aus der DE 31 29 063 A1 ist eine weitere umlegbare Kopfstütze bekannt, bei der ein als polstertragendes Bestandteil der Kopfstütze ausgebildeter Querträger am Lagerkörper der Tragstangen drehbar gelagert und sperrbar ausgebildet ist. Dabei sind die drehbare Lagerung und die Sperrvorrichtung des Querträgers ebenfalls innerhalb der Kopfstütze angeordnet. Bei Modellwechsel, Änderungen in der Lager- bzw. Sperrvorrichtung oder im Reparaturfalle muß somit die gesamte Kopfstütze erneuert bzw. ausgetauscht werden.

Der vorliegenden Erfindung liegt die Aufgabe zugrunde, eine umlegbare Kopfstütze der eingangs genannten Art für ein Kraftfahrzeug zu schaffen, welche bei einer relativ einfachen und komfortablen Bedienung sicher und kostengünstig herstellbar sowie an der Stelle der herkömmlichen Kopfstützen im Fahrzeug befestigbar ist.

Diese Aufgabe wird erfindungsgemäß durch die im kennzeichnenden Teil des Patentanspruches 1 angegebenen Merkmale gelöst.

Mit dieser Ausbildung können einzelne Teile der Kopfstütze, beispielsweise die Polsterung mit der Tragstruktur oder die Schwenkvorrichtung mit der Verriegelungsvorrichtung, als separate Bestandteile der Kopfstütze hergestellt und vormontiert werden. Bei Änderungen, beispielsweise der Form und/oder der Materialzusammensetzung des Polsterteils, müssen nur diese geänderte Teile ausgetauscht werden. Die Schwenkvorrichtung sowie auch die Verriegelungsvorrichtung können weiterhin benutzt werden.

Die Schwenkvorrichtung kann unterschiedlich gestaltet sein. Gemäß einer bevorzugten Ausführung sind die einerseits am Gehäuse befestigten Stützen andererseits lösbar mit der Rückenlehne oder dem mit der Karosserie verbundenen Bauteil verbunden. Bei dem mit der Karosserie verbundenen Bauteil kann es sich beispielsweise um eine stabile Laderaumabdeckung handeln, welche an beiden Seiten mit der Karosserie verbunden ist. Bei dieser Ausführung ist der mit der Kopfstütze verbundene Lagerzapfen drehbar im feststehenden Gehäuse aufgenommen. Die an der Rückenlehne oder dem mit der Karosserie verbundenen Bauteil befestigten Stützen können auch gemäß einer anderen Ausführung der Schwenkvorrichtung mit dem Lagerzapfen verbunden sein, welcher dann das mit der Kopfstütze verbundene Gehäuse drehbar lagert.

Zur lösbaren Verbindung der Kopfstütze mit der Schwenkvorrichtung sind ebenfalls Stützen vorgesehen, welche jeweils mit einem Ende lösbar mit der Tragstruktur der Kopfstütze und mit dem anderen Ende mit dem Gehäuse bzw. dem Lagerzapfen verbunden sind. Bei der zuvor beschriebenen Ausführung der Schwenkvorrichtung, bei welcher das feststehende Gehäuse den Lagerzapfen drehbar aufnimmt, sind diese Stützen mit dem Lagerzapfen verbunden. Bei der alternativen Ausführung der Schwenkvorrichtung, bei welcher der feststehende Lagerzapfen das Gehäuse drehbar aufnimmt, wären somit die mit der Tragstruktur der Kopfstütze lösbar verbundenen Stützen fest mit dem Gehäuse verbunden.

Um dabei eine schnelle Befestigung der Kopfstütze an der Schwenkvorrichtung zu erreichen, kann sowohl die lösbare Verbindung der Stützen mit der Tragstruktur als auch deren Verbindung mit dem Lagerzapfen bzw. dem Gehäuse durch an sich bekannte Rastmittel gebildet sein.

Die lösbare Befestigung der Kopfstütze im Kraftfahrzeug kann besonders einfach und kostengünstig hergestellt werden, wenn die Stützen als an sich bekannte Tragstangen ausgebildet sind, welche in hülsenartige Führungen an der Kopfstütze und/oder der Rückenlehne bzw. am mit der Karosserie verbundenen Bauteil einsteckbar und darin befestigbar sind. Die Tragstangen können dabei rastend in den hülsenartigen Führungen befestigt sein. Diese Ausbildung ermöglicht eine einfache Montage der Kopfstütze am Kraftfahrzeugsitz, wobei bei Bedarf auch die herkömmlichen höhen- bzw. neigungsverstellbaren Kopfstützen durch erfindungsgemäße umlegbare Kopfstützen ersetzt werden können.

Gemäß einer bevorzugten Ausführung der Erfindung ist vorgesehen, daß die Verriegelungsvorrichtung einen innerhalb des Gehäuses angeordneten und gegen die Kraft einer Feder verschiebbaren Riegel aufweist, welcher in einer nutenartigen Führung am Lagerzapfen geführt ist und Sperrnasen oder Sperrkanten aufweist, welche im verriegelten Zustand formschlüssig in eine Ausnehmung im Gehäuse eingreifen oder mit einem Anschlag am Gehäuse zusammenwirken. Der Riegel ist dabei durch Betätigung von mindestens einem am Gehäuse oder Lagerzapfen angeordneten Entriegelungsknopf in eine Freigabestellung überführbar, in der sich die Sperrnasen oder Sperrkanten außer Eingriff mit der Ausnehmung am Gehäuse befinden. Mit dieser Ausbildung kann die Kopfstütze sowohl in der etwa vertikalen Gebrauchslage sicher verriegelt als auch mittels eines Entriegelungsknopfes einfach entriegelt werden.

Um dabei den Komfort bei der Bedienung der Kopfstütze im Kraftfahrzeug zu erhöhen, ist erfindungsgemäß vorgesehen, daß zur selbsttätigen Überführung der entriegelten Kopfstütze in eine Nichtgebrauchslage mindestens eine Verdrehfeder, vorzugsweise eine Schenkelfeder, innerhalb des Gehäuses angeordnet ist, welche sich federnd einerseits am Lagerzapfen und andererseits am Gehäuse abstützt. Die Feder befindet sich in der verriegelten Stellung der Kopfstütze im gespannten Zustand. Bei der Betätigung des Entriegelungsknopfes wird die Kopfstütze durch die Federkraft selbsttätig in die Nichtgebrauchslage, beispielsweise in eine um 90° nach vorn oder nach hinten gedrehte Position, überführt. Zur Überführung der Kopfstütze in die etwa vertikale Gebrauchslage muß dagegen die Kopfstütze gegen die Kraft der Feder nach oben gedreht werden, bis die Sperrnasen bzw. -kanten des Riegels in der Ausnehmung am Gehäuse einrasten.

Die Führung des Riegels am Lagerzapfen kann unterschiedlich ausgebildet sein. Nach einer bevorzugten Ausführung kann der Riegel innerhalb des Gehäuses in der nutenartigen Führung am Lagerzapfen axial verschiebbar aufgenommen sein, wobei mindestens ein Führungszapfen des Riegels in einer Bohrung am Lagerzapfen spielfrei geführt ist. Der Riegel ist somit durch die nutenartige Führung gegenüber dem Lagerzapfen verdrehsicher aufgenommen und durch den Führungszapfen präzise axial verschiebbar geführt.

Die axiale Führung des Riegels am Lagerzapfen ist konstruktiv besonders einfach zu gestalten, wenn innerhalb des Gehäuses zwei Lagerzapfen angeordnet sind, welche unverdrehbar den Riegel aufnehmen. Bei dieser Ausbildung sind die nutenartigen Führungen, in die der Riegel mit seinen abgeflachten Bereichen verdrehsicher eingreift, in axialer Richtung größer als der Riegel bemessen, so daß sich dieser zwischen zwei Stellungen bewegen kann. Die an beiden Seiten des Riegels angeordneten Führungszapfen sind dabei in Bohrungen der Lagerzapfen verschiebbar aufgenommen, wobei in verriegelter Stellung die an einem Führungszapfen angeordnete Feder den Riegel gegen einen Nutengrund am gegenüberliegenden Lagerzapfen vorspannt.

Zur Verriegelung des Gehäuses gegenüber den Lagerzapfen ist vorgesehen, daß am Gehäuse, vorzugsweise etwa im mittleren Bereich, eine Wandung mit einer axialen Bohrung vorgesehen ist, wobei die Wandung zwischen der Bohrung und dem Mantel des Gehäuses mindestens eine Ausnehmung zum Einführen des Riegels bzw. dessen Sperrnasen oder -kanten bei der Verriegelung der Kopfstütze aufweist. In verriegelter Stellung befinden sich somit die am Riegel etwa im mittleren Bereich zwischen den Lagerzapfen angeordneten Sperrnasen bzw. -kanten federbelastet in den Ausnehmungen am Gehäuse.

Bei einer alternativen Ausbildung der Verriegelungsvorrichtung kann der Riegel innerhalb des Gehäuses senkrecht zur Achse des Gehäuses verschiebbar angeordnet sein. In diesem Falle ist die Ausnehmung am Mantel des Gehäuses etwa im mittleren Bereich zwischen den Tragstangen angeordnet, in die in verriegelter Stellung der federbelastete Riegel eingreift. Eine derartige Ausbildung ermöglicht auch, das Gehäuse der Schwenkvorrichtung am Kraftfahrzeugsitz versenkt anzuordnen, wenn an der Oberseite der Rückenlehne oder am mit der Karosserie verbundenen Bauteil eine entsprechende Aussparung vorgesehen ist. Diese Aussparung kann vorteilhafterweise mittels eines Verkleidungsteiles, in dem Öffnungen für die Stützen und den Entriegelungsknopf vorgesehen sind, verschlossen sein.

Schließlich kann der Komfort bei der Bedienung der Kopfstütze noch weiter erhöht werden, wenn die Kopfstütze mittels einer auf den Riegel oder den Betätigungsknopf einwirkenden Antriebsvorrichtung, beispielsweise eines fernbetätigbaren Seilzuges, aus der Verriegelungsstellung lösbar ist.

Die Erfindung läßt zahlreiche Ausführungsformen zu. Zur weiteren Verdeutlichung ihres Grundprinzips sind einige davon in der Zeichnung dargestellt und nachfolgend beschrieben. Die Zeichnung zeigt teilweise schematisch in
- Figur 1:: eine perspektivische Ansicht einer am Kraftfahrzeugsitz befestigten und nach vorn umgelegten Kopfstütze;
- Figur 2:: eine perspektivische Ansicht der Kopfstütze nach Figur 1, welche jedoch an einer Laderaumabdeckung des Kraftfahrzeuges befestigt und nach hinten umgelegt ist;
- Figur 3:: eine perspektivische Ansicht eines Hintersitzes mit der umlegbaren Kopfstütze nach Figur 2, welche als eine Mittenkopfstütze ausgebildet ist;
- Figur 4:: eine perspektivische Ansicht der Mittenkopfstütze nach Figur 3, in einer nach hinten geschwenkten Lage und mit einer Polsterung im Bereich der Schwenkvorrichtung;
- Figur 5:: einen Aufbau der Schwenkvorrichtung nach Figur 1, in perspektivischer Ansicht;
- Figur 6:: eine alternative Ausbildung des Riegels nach Figur 5, in perspektivischer Ansicht;
- Figur 7 und Figur 8:: eine alternative Ausbildung der Schwenkvorrichtung nach Figur 5, in perspektivischer Ansicht;
- Figur 9:: eine Weiterbildung der Schwenkvorrichtung nach Figuren 7 und 8, in perspektivischer Ansicht;
- Figur 10:: einen Querschnitt im mittleren Bereich der Schwenkvorrichtung nach Figur 7;
- Figur 11 bis Figur 13:: eine Anordnung der Kopfstütze mit einer an der Rückenlehne versenkten Schwenkvorrichtung nach den Figuren 7 bis 10, in perspektivischer Ansicht.

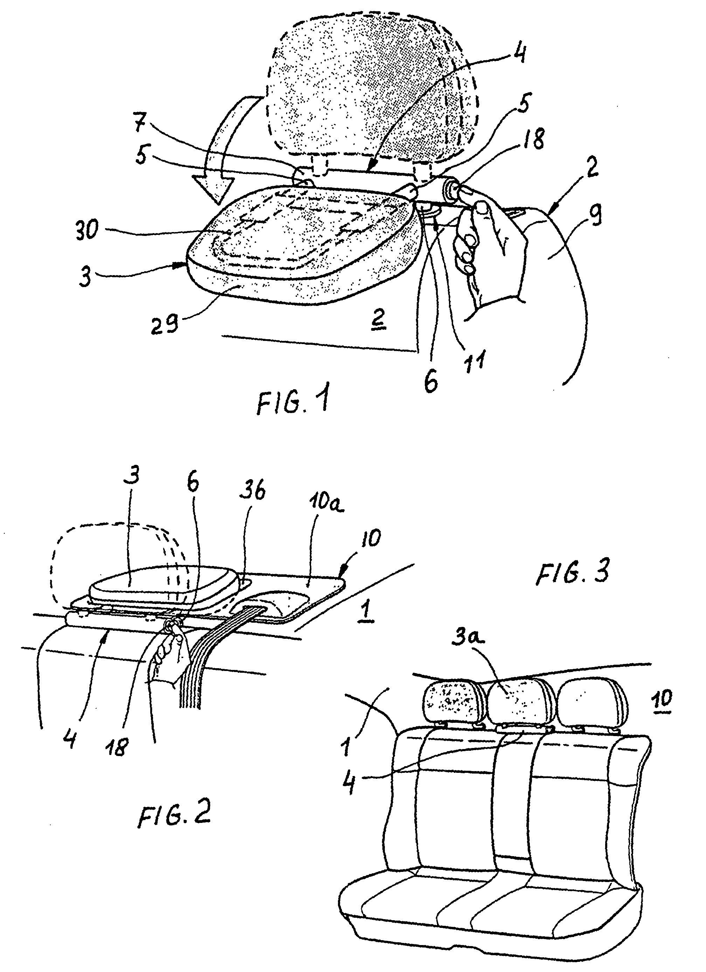

Die Figur 1 zeigt eine an der Rückenlehne 9 eines Kraftfahrzeugsitzes 2 befestigte und um etwa 90° nach vorn geschwenkte Kopfstütze 3 (die Nichtgebrauchslage), welche im wesentlichen aus einer Tragstruktur 30 und einer diese umhüllenden Polsterung 29 besteht. Zur Schwenkung der Kopfstütze 3 ist außerhalb der Kopfstütze 3 eine Schwenkvorrichtung 4 vorgesehen, welche mittels Stützen 5 mit der Tragstruktur 30 verbunden ist. An der Schwenkvorrichtung 4 sind weiterhin Stützen 6 zur lösbaren Befestigung an der Rückenlehne 9 vorgesehen. Die Kopfstütze 3 ist mittels der Schwenkvorrichtung 4 in eine etwa vertikale Gebrauchslage (mit Strichlinien dargestellt) überführbar und in dieser Lage mittels einer innerhalb der Schwenkvorrichtung 4 befindlichen Verriegelungsvorrichtung verriegelbar. Zur Entriegelung und Überführung der Kopfstütze 3 in die Nichtgebrauchslage muß ein an einer Seite der Schwenkvorrichtung 4 angeordneter Entriegelungsknopf 18 betätigt werden.

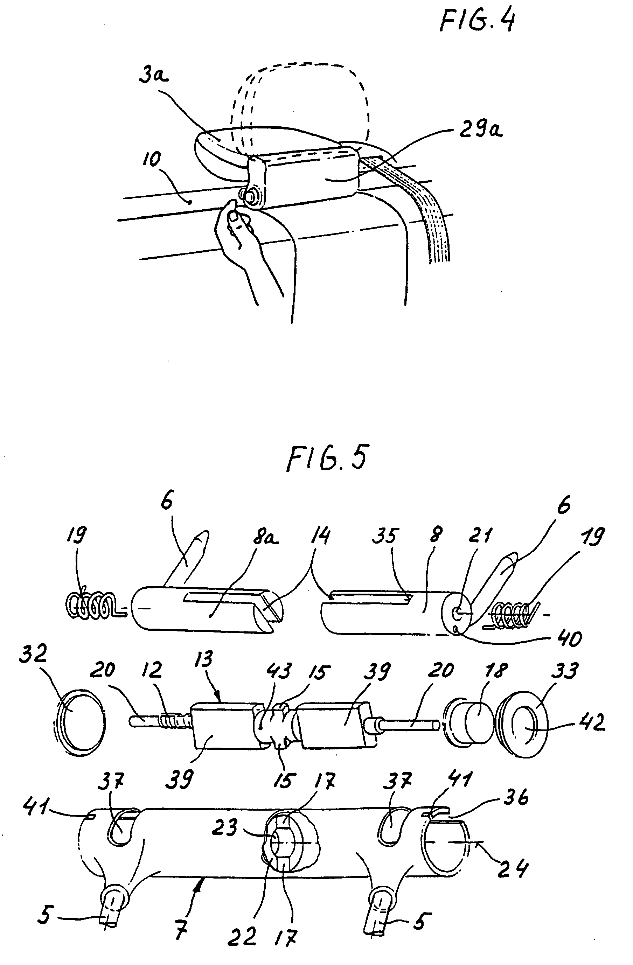

Die Kopfstütze 3 kann auch, wie in Figur 2 dargestellt, an einem mit der Karosserie 1 verbundenen Bauteil 10, beispielsweise einem nicht dargestellten Querträger einer Laderaumabdeckung 10a, befestigbar und nach hinten umlegbar ausgebildet sein. Im dargestellten Beispiel ist die Kopfstütze 3 mittels der Stützen 6 lösbar am Querträger befestigt. An der Laderaumabdeckung 10a ist zur Verbesserung der Sicht nach hinten eine Mulde 36 zur Aufnahme der entriegelten und nach hinten umgelegten Kopfstütze 3 vorgesehen. Eine derartig ausgebildete Kopfstütze 3 kann vorzugsweise als eine Mittenkopfstütze 3a (Figur 3) Verwendung finden, bei der zur Erhöhung der Sicherheit und des Komforts zusätzlich im Bereich der Schwenkvorrichtung 4, wie in Figur 4 dargestellt, eine Polsterung 29a vorgesehen ist.

In Figur 5 ist der Aufbau der Schwenkvorrichtung 4 nach Figuren 1 bis 4 dargestellt, welche im wesentlichen aus einem Gehäuse 7 und zwei darin drehbar gelagerten Lagerzapfen 8, 8a besteht. Zur lösbaren Verbindung der Schwenkvorrichtung 4 mit der nicht dargestellten Rückenlehne 9 sind an den Lagerzapfen 8, 8a Stützen 6 und zur Verbindung mit der ebenfalls nicht dargestellten Tragstruktur 30 sind am Gehäuse 7 Stützen 5 vorgesehen. Die Stützen 5, 6 sind als an sich bekannte Tragstangen ausgebildet, welche beispielsweise in hülsenartigen Führungen 11 (siehe Figur 1) an der Rückenlehne 9 verrastbar sind. Zur Montage der Lagerzapfen 8, 8a am Gehäuse 7 sind am Mantel des Gehäuses 7 jeweils ein Längsschlitz 36 und ein radialer Schlitz 37 für die Stützen 6 vorgesehen, wobei der Längsschlitz 36 das Einschieben und der radiale Schlitz 37 die verdrehbare Lagerung im Gehäuse 7 ermöglicht.

Die innerhalb der Schwenkvorrichtung 4 angeordnete Verriegelungsvorrichtung besteht im wesentlichen aus einem Riegel 13, welcher mit seinen abgeflachten Bereichen 39 in nutenartigen Führungen 14 der Lagerzapfen 8, 8a verdrehsicher aufgenommen ist und etwa im mittleren Bereich einen im Querschnitt kreisförmigen Abschnitt 43 mit radial abstehenden Sperrnasen 15 aufweist. Der Abschnitt 43 ist zur axialen Führung des Riegels 13 in einer Bohrung 23 in der Wandung 22 verschiebbar gelagert. Ebenfalls zur verschiebbaren Lagerung des Riegels 13 sind an seinen beiden Enden axialgerichtete Führungszapfen 20 vorgesehen, die im montierten Zustand Bohrungen 21 an den Lagerzapfen 8, 8a spielfrei durchsetzen. Eine an einem Lagerzapfen 8a angeordnete und axial wirkende Feder 12 spannt dabei den Riegel 13 gegen einen Nutengrund 35 am anderen Lagerzapfen 8 vor. In dieser Stellung befinden sich die Sperrnasen 15 in den Ausnehmungen 17 der Wandung 22 am Gehäuse 7, wodurch die Lagerzapfen 8, 8a unverdrehbar mit dem Gehäuse 7 verbunden sind.

Bei Betätigung des Entriegelungsknopfes 18, der auf den Führungszapfen 20 einwirkt, verschiebt sich entgegen der Kraft der Feder 12 der Riegel 13, so daß die Sperrnasen 15 außer Eingriff mit Ausnehmungen 17 gelangen. Das Gehäuse 7 und die mit ihm verbundene Kopfstütze 3 können somit in die Nichtgebrauchslage überführt werden.

Zur selbsttätigen Überführung der Kopfstütze 3 in die Nichtgebrauchslage sind innerhalb des Gehäuses 7 zwei Verdrehfedern 19 angeordnet, welche sich federnd einerseits an den Lagerzapfen 8, 8a und andererseits am Gehäuse 7 abstützen. Dazu sind an den Lagerzapfen 8, 8a Bohrungen 40 und am Gehäuse 7 Schlitze 41 vorgesehen, in welche die jeweiligen Verdrehfedern 19 mit ihren freien Schenkeln eingreifen. Ein Deckel 32 und eine Blende 33 verschließen dabei stirnseitig das Gehäuse 7, wobei die Blende 33 eine Öffnung 42 für den Entriegelungsknopf 18 aufweist.

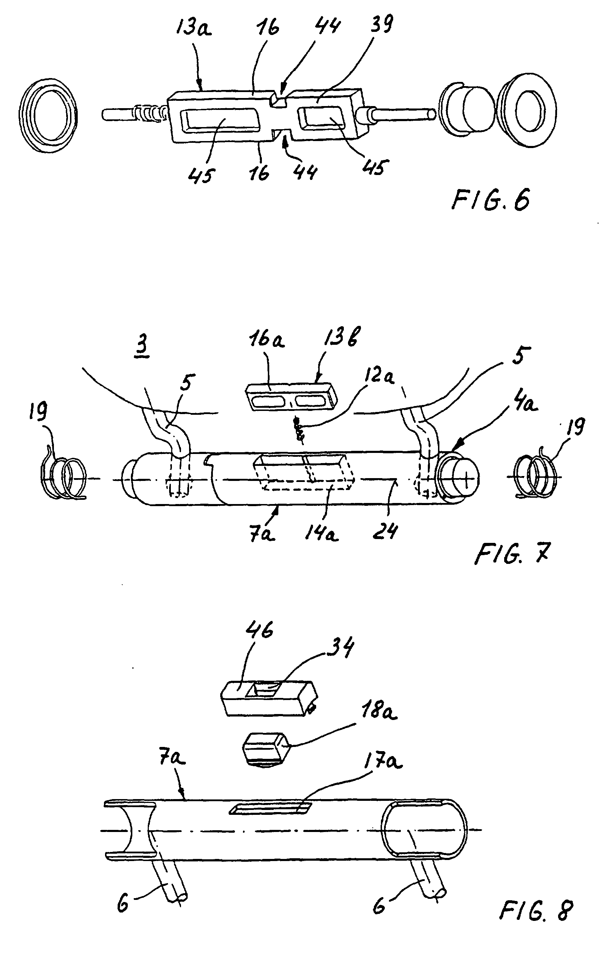

In Figur 6 ist eine alternative Ausbildung des Riegels 13a dargestellt, die sich von der Ausbildung nach Figur 5 dadurch unterscheidet, daß der Riegel 13a etwa im mittleren Bereich zwei Ausnehmungen 44 und angrenzend an die Ausnehmungen 44 zwei Sperrkanten 16 aufweist, wobei die Funktion der Sperrkanten 16 der Funktion der Sperrnasen 15 in der Ausbildung des Riegels 13 nach Figur 5 entspricht. Zur Vereinfachung der Herstellung und Reduzierung des Gewichtes ist der Riegel 13a mit abgeflachten Bereichen 39, die sich über die gesamte Breite des Riegels 13a erstrecken, und Öffnungen 45 ausgebildet.

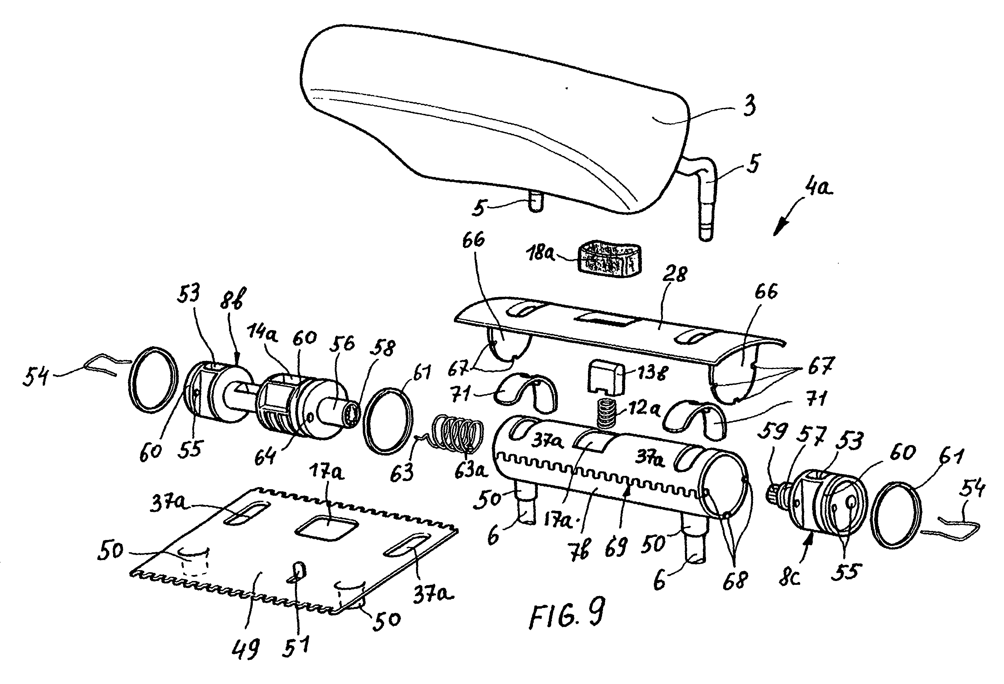

Bei der Ausbildung der Schwenkvorrichtung 4a nach Figuren 7 bis 10 sind im Gegensatz zu der zuvor beschriebenen Ausführung das Gehäuse 7a, 7b mittels Stützen 6 an der nicht dargestellten Rückenlehne 9 und die Lagerzapfen 8b, 8c (Figur 9) mittels Stützen 5 an der Kopfstütze 3 befestigt. Die Lagerzapfen 8b, 8c sind bei dieser Ausführung im relativ zu der Rückenlehne 9 stehenden Gehäuse 7a drehbar gelagert. Die innerhalb der Schwenkvorrichtung angeordnete Verriegelungsvorrichtung besteht dabei im wesentlichen aus einem in einer nutenartigen Führung 14a am Lagerzapfen 8b senkrecht zur Achse 24 des Gehäuses 7a geführten Riegel 13b, welcher von einer in radialer Richtung wirkenden Feder 12a in die Verriegelungsstellung vorgespannt ist. In der Verriegelungsstellung greift der Riegel 13a mit seiner Sperrkante 16a in eine am Mantel des Gehäuses 7a angeordnete Ausnehmung 17a ein und verbindet somit unverdrehbar das Gehäuse 7a mit dem Lagerzapfen 8b.

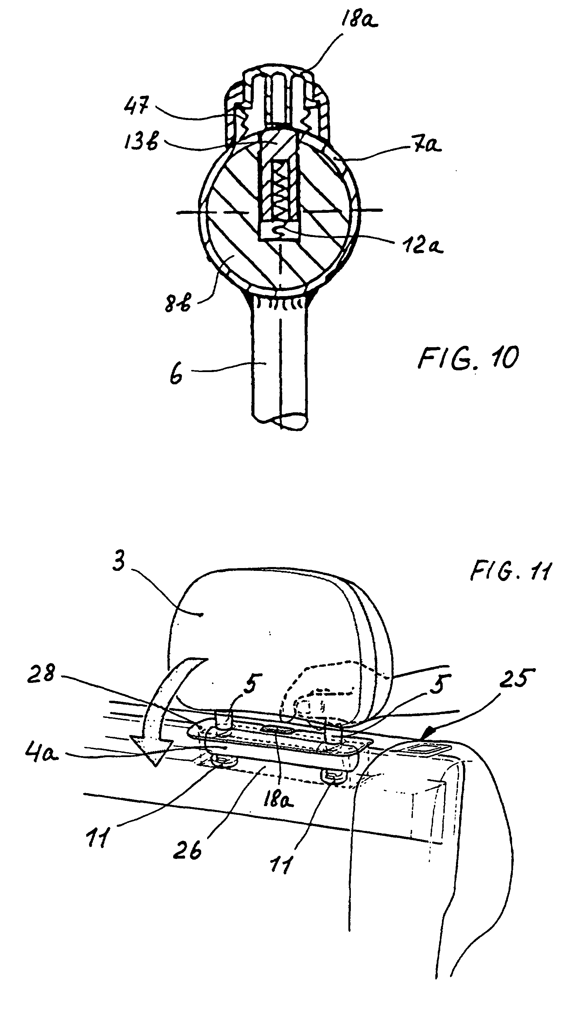

Zur Entriegelung des Lagerzapfens 8b und somit auch der Kopfstütze 3 ist an der Ausnehmung 17a ein federbelasteter Entriegelungsknopf 18a vorgesehen, welcher radial nach innen zur der Achse 24 hin betätigbar ist. An der Ausnehmung 17a ist dazu ein Halteteil 46 (Figur 8) verrastbar angeordnet, das eine Führungsöffnung 34 für den Entriegelungsknopf 18a aufweist. Am Entriegelungsknopf 18a und am Halteteil 46 sind dabei Anschläge zur Begrenzung der radialen Bewegung des von einer Feder 47 (Figur 10) beaufschlagten Entriegelungsknopfes 18a vorgesehen. Der in der Verriegelungsstellung gegen das Halteteil 46 bzw. den Entriegelungsknopf 18a vorgespannter Riegel 13b ist durch Betätigung des Entriegelungsknopfes 18a in die Freigabestellung überführbar, in der sich die Sperrkante 16a außer Eingriff mit der Ausnehmung 17a befindet.

Das Gehäuse 7b kann, wie in Fig. 9 dargestellt, aus einer flachen Platine 49 hergestellt sein, in der Schlitze 37a für die Stützen 5 und die Ausnehmung 17a für den Riegel 13b sowie Durchzüge 50 zur Verbindung mit Stützen 6 vorgefertigt sind. Die Platine 49 wird zu einem rohrförmigen Gehäuse 7b mit einer form- und kraftschlüssigen Verbindung im Bereich der Naht 69 gerollt, wobei die Naht 69 durch Verkrallen bzw. Verkrampfen geschlossen ist. Im Gehäuse 7b sind zwei aus Kunststoff hergestellte und miteinander formschlüssig verbundene Lagerzapfen 8b, 8c drehbar lagert, welche radiale Öffnungen 53 zur Verbindung mit Stützen 5 aufweisen. Die Stützen 5 werden in Öffnungen 53 mittels jeweils einer Rast- oder Sperrfeder 54 gehalten, welche bei der Befestigung mit einer an der Stütze 5 vorgesehenen Rastnut 70 zusammenwirkt. Die Rast-oder Sperrfedern 54 werden an den Lagerzapfen 8b, 8c in axialen Bohrungen 55 fixiert.

Zur formschlüssigen Verbindung der beiden Lagerzapfen 8b, 8c ist am Lagerzapfen 8b eine im Bereich eines Zapfens 56 angeordnete Innenverzahnung 58 vorgesehen, welche mit einer an einem Zapfen 57 des Lagerzapfens 8c angeordneten Außenverzahnung 59 zusammenwirkt. Zwischen den beiden Lagerzapfen 8b, 8c ist zur selbsttätigen Überführung der Kopfstütze 3 in die Nichtgebrauchslage im Bereich der Zapfen 56, 57 eine Verdrehfeder 61 angeordnet, welche sich mit einem Ende 63 in einer Ausnehmung 64 am Lagerzapfen 8b und mit dem anderen Ende 63a an einem Anschlag 51 am Gehäuse 7b (dargestellt an der Platine 49) abstützt. Das radiale Spiel zwischen den Lagerzapfen 8b, 8c und dem Gehäuse 7b wird dabei durch gleichzeitig als Dämpfungselemente wirkende elastische Kunststoff- oder Gummiringe 61 ausgeglichen, welche in umlaufenden Nuten 60 gehalten sind.

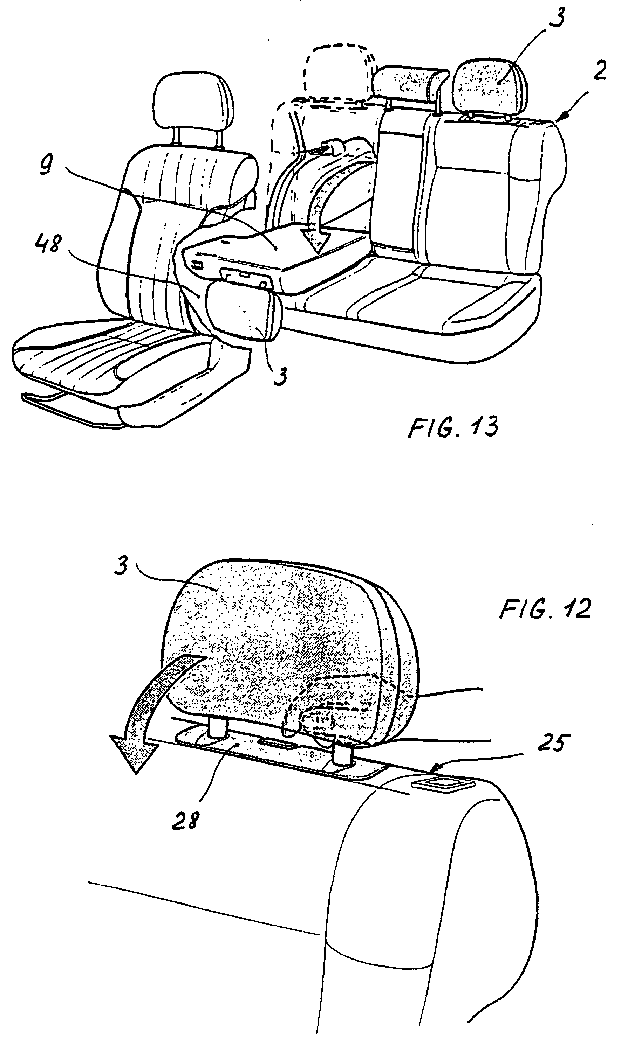

Aufgrund dieser vorteilhaften Ausbildung kann die Schwenkvorrichtung 4a in einer Aussparung 26 am Kraftfahrzeug 2, wie in Figuren 11, 12 und 13 dargestellt, versenkt angeordnet werden. Insbesondere die Figur 11 zeigt die Anordnung der Schwenkvorrichtung 4a an der Rükkenlehne 9, bei der die Schwenkvorrichtung 4a zusammen mit den Stützen 6 in der Aussparung 26 unterhalb der Oberseite 25 der Rückenlehne 9 in hülsenartigen Führungen 11 befestigt ist. Die Aussparung 26 ist dabei mittels eines Verkleidungsteils 28 abgedeckt, das Öffnungen für die Stützen 5 und den Entriegelungsknopf 18a aufweist. Das Verkleidungsteil 28 ist, wie in Fig. 9 gezeigt, mit senkrecht abstehenden Wangen 66 ausgebildet, welche im befestigten Zustand die Stirnseiten des Gehäuses 7b verschließen. Zur Befestigung des Verkleidungsteils 28 sind an den Wangen 66 symmetrisch angeordnete Rastausnehmungen 67 vorgesehen, welche verrastbar mit an den Stirnseiten des Gehäuses 7b angeordneten Raststegen 68 zusammenwirken.

An der Schwenkvorrichtung 4a sind weiterhin zwischen dem Verkleidungsteil 28 und dem Gehäuse 7b auf der Oberfläche des Gehäuses 7b verschiebbare Abdeckblenden 71 vorgesehen, welche jeweils symmetrisch angeordnete Öffnungen für die Stützen 5 aufweisen und in jeder Stellung der Kopfstütze 3 die Schlitze 37a abdecken.

Wie Figur 13 zeigt, eignet sich eine derartige Kopfstütze 3 insbesondere für die Hintersitze eines Kraftfahrzeuges, bei dem die Kopfstütze 3 an der nach vorn umgelegten Rückenlehne 9 im Zwischenraum 48 zwischen den Sitzreihen untergebracht werden kann.

## Patentansprüche

1. Umlegbare Kopfstütze, insbesondere für einen eine Rückenlehne aufweisenden Kraftfahrzeugsitz, mit einer Tragstruktur und einer diese umhüllenden Polsterung, wobei die Kopfstütze
- mittels mindestens einer Stütze an der Rückenlehne oder einem im Bereich der Rückenlehnen-Oberkante angeordneten und mit der Karosserie verbundenen Bauteil befestigbar,
- mittels einer Schwenkvorrichtung um eine etwa waagerechte, in Querrichtung des Kraftfahrzeuges liegende Achse nach vorn und/oder nach hinten schwenkbar sowie
- mittels einer Verriegelungsvorrichtung mindestens in der etwa annähernd vertikalen Gebrauchslage verriegelbar ist, wobei
- die Schwenkvorrichtung (4; 4a) außerhalb der Kopfstütze (3; 3a) angeordnet ist und die Stützen (6) mit der Schwenkvorrichtung verbunden sind,
**dadurch gekennzeichnet, daß**
- die Schwenkvorrichtung (4; 4a) ein hülsenförmiges Gehäuse (7; 7a) mit mindestens einem darin drehbar gelagerten Lagerzapfen (8, 8a; 8b) aufweist, wobei das Gehäuse (7; 7a) oder der Lagerzapfen (8, 8a; 8b, 8c) durch mindestens eine weitere Stütze (5) mit der Tragstruktur (30) der Kopfstütze (3; 3a) verbunden ist
und
- die Verriegelungsvorrichtung innerhalb des Gehäuses (7; 7a) angeordnet und in Verriegelungsstellung das Gehäuse (7; 7a) mit dem Lagerzapfen (8, 8a; 8b, 8c) verbunden ist.

2. Umlegbare Kopfstütze nach Anspruch 1, **dadurch gekennzeichnet, daß** die einerseits am Gehäuse (7; 7a) bzw. am Lagerzapfen (8, 8a; 8b, 8c) befestigten Stützen (6) andererseits lösbar mit der Rückenlehne (9) oder dem mit der Karosserie (1) verbundenen Bauteil (10, 10a) verbindbar sind.

3. Umlegbare Kopfstütze nach Anspruch 1, **dadurch gekennzeichnet, daß** die einerseits am Gehäuse (7; 7a) bzw. am Lagerzapfen (8, 8a; 8b, 8c) befestigten Stützen (5) andererseits lösbar an der Tragstruktur (30) der Kopfstütze (3; 3a) befestigt sind.

4. Umlegbare Kopfstütze nach einem der Ansprüche 1 bis 3, **dadurch gekennzeichnet, daß** die Stützen (5 bzw. 6) durch an sich bekannte Rastmittel, beispielsweise Rast- oder Sperrnasen bzw. -nuten, mit dem Lagerzapfen (8, 8a; 8b, 8c) verbunden sind.

5. Umlegbare Kopfstütze nach einem der Ansprüche 1 bis 4, **dadurch gekennzeichnet, daß** die Stützen (5, 6) als an sich bekannte Tragstangen ausgebildet sind, welche in hülsenartige Führungen an der Tragstruktur (30) der Kopfstütze (3; 3a) und/oder an der Rückenlehne (9) bzw. am mit der Karosserie (1) verbundenen Bauteil (10, 10a) einsteckbar und darin befestigbar sind.

6. Umlegbare Kopfstütze nach Anspruch 1, **dadurch gekennzeichnet, daß** die Verriegelungsvorrichtung einen innerhalb des Gehäuses (7; 7a) angeordneten und gegen die Kraft einer Feder (12; 12a) verschiebbaren Riegel (13; 13a; 13b) aufweist, welcher in einer nutenartigen Führung (14; 14a) am Lagerzapfen (8, 8a; 8b, 8c) geführt ist und Sperrnasen (15) oder Sperrkanten (16, 16a) aufweist, welche im verriegelten Zustand formschlüssig in eine Ausnehmung (17; 17a) im Gehäuse (7; 7a) eingreifen oder mit einem Anschlag am Gehäuse (7; 7a) zusammenwirken, wobei der Riegel (13; 13a; 13b) durch Betätigung von mindestens einem am Gehäuse (7; 7a) oder Lagerzapfen (8, 8a; 8b, 8c) angeordneten Entriegelungsknopf (18; 18a) in eine Freigabestellung überführbar ist.

7. Umlegbare Kopfstütze nach Anspruch 6, **dadurch gekennzeichnet, daß** zur selbsttätigen Überführung der entriegelten Kopfstütze (3; 3a) in eine Nichtgebrauchslage mindestens eine Verdrehfeder (19), vorzugsweise eine Schenkelfeder, innerhalb des Gehäuses (7; 7a) angeordnet ist, welche sich federnd einerseits am Lagerzapfen (8, 8a; 8b, 8c) und andererseits am Gehäuse (7; 7a) abstützt.

8. Umlegbare Kopfstütze nach Anspruch 6, **dadurch gekennzeichnet, daß** der Riegel (13; 13a) axial verschiebbar innerhalb des Gehäuses (7; 7a) gelagert ist, wobei mindestens ein Führungszapfen (20) des Riegels (13; 13a) in einer Bohrung (21) am Lagerzapfen (8, 8a) spielfrei geführt ist.

9. Umlegbare Kopfstütze nach einem der Ansprüche 1 bis 8, **dadurch gekennzeichnet, daß** innerhalb des Gehäuses (7; 7a) zwei Lagerzapfen (8, 8a; 8b, 8c) angeordnet sind, welche jeweils mit einer Stütze (5 bzw. 6) verbunden sind, wobei mindestens ein Lagerzapfen (8, 8a, 8b, 8c) unverdrehbar den Riegel (13; 13a) aufnimmt.

10. Umlegbare Kopfstütze nach einem der Ansprüche 6 bis 9, **dadurch gekennzeichnet, daß** am Gehäuse (7; 7a), vorzugsweise etwa im mittleren Bereich, eine Wandung (22) mit einer axialen Bohrung (23) vorgesehen ist, wobei die Wandung (22) zwischen der Bohrung (23) und dem Mantel des Gehäuses (7) mindestens eine Ausnehmung (17) zum Einführen des Riegels (13; 13a) bei der Verriegelung der Kopfstütze (3; 3a) aufweist.

11. Umlegbare Kopfstütze nach Anspruch 6 oder 7, **dadurch gekennzeichnet, daß** der Riegel (13b) innerhalb des Gehäuses (7a) senkrecht zur Achse (24) des Gehäuses (7a) verschiebbar angeordnet ist.

12. Umlegbare Kopfstütze nach Anspruch 1, **dadurch gekennzeichnet, daß** an der Oberseite (25) der Rückenlehne (9) oder am mit der Karosserie (1) verbundenen Bauteil (10, 10a) eine Aussparung (26) zur Versenkung der Schwenkvorrichtung (4a) vorgesehen ist.

13. Umlegbare Kopfstütze nach Anspruch 12, **dadurch gekennzeichnet, daß** die Aussparung (26) mittels eines Durchtrittsöffnungen für die Stützen (5) und den Entriegelungsknopf (18a) aufweisenden Verkleidungsteils (28) verschließbar ist.

14. Umlegbare Kopfstütze nach einem der Ansprüche 6 bis 11, **dadurch gekennzeichnet, daß** die Kopfstütze (3; 3a) mittels einer auf den Riegel (13; 13a; 13b) oder den Entriegelungsknopf (18; 18a) einwirkenden Antriebsvorrichtung, beispielsweise eines fernbetätigbaren Seilzuges, aus der Verriegelungsstellung lösbar ist.

## Claims

1. Folding headrest, in particular for a motor vehicle seat comprising a backrest, with a supporting structure and upholstery enveloping the latter, wherein the headrest
- can be attached by means of at least one post to the backrest or to a structural member arranged in the region of the upper edge of the backrest and connected to the vehicle body,
- is pivotable forwards and/or backwards by means of a pivot device about an approximately horizontal axis located in the transverse direction of the motor vehicle and
- can be locked by means of a locking device at least in the approximately almost vertical working position, wherein
- the pivot device (4; 4a) is arranged outside the headrest (3; 3a) and the posts (6) are connected to the pivot device,
**characterised in that**
- the pivot device (4; 4a) comprises a sleeve-like housing (7; 7a) with at least one journal (8, 8a; 8b) mounted rotatably therein, wherein the housing (7; 7a) or the journal (8, 8a; 8b, 8c) is connected by at least one additional post (5) to the supporting structure (30) of the headrest (3; 3a) and
- the locking device is arranged inside the housing (7; 7a) and in the locking position the housing (7; 7a) is connected to the journal (8, 8a; 8b, 8c).

2. Folding headrest according to claim 1, **characterised in that** the posts (6) attached on the one hand to the housing (7; 7a) or to the journal (8, 8a; 8b, 8c) on the other hand can be connected releasably to the backrest (9) or to the structural member (10, 10a) connected to the body (1).

3. Folding headrest according to claim 1, **characterised in that** the posts (5) attached on the one hand to the housing (7; 7a) or to the journal (8, 8a; 8b, 8c) on the other hand are attached releasably to the supporting structure (30) of the headrest (3; 3a).

4. Folding headrest according to any of claims 1 to 3, **characterised in that** the posts (5 or 6) are connected by latch means known in the art, for example latch or locking lugs or grooves, to the journal (8, 8a; 8b, 8c).

5. Folding headrest according to any of claims 1 to 4, **characterised in that** the posts (5, 6) are constructed as supporting rods known in the art, which can be inserted in sleeve-like guides on the supporting structure (30) of the headrest (3; 3a) and/or on the backrest (9) or on the structural member (10, 10a) connected to the body (1), and fixed therein.

6. Folding headrest according to claim 1, **characterised in that** the locking device comprises a bolt (13; 13a; 13b) which is arranged inside the housing (7; 7a) and slidable against the force of a spring (12; 12a) and which is guided in a groove-like guide (14; 14a) on the journal (8, 8a; 8b, 8c) and comprises locking lugs (15) or locking edges (16, 16a) which in the locked state engage in form-locking relationship in a recess (17; 17a) in the housing (7; 7a) or cooperate with a stop on the housing (7; 7a), wherein the bolt (13; 13a; 13b) can be transferred to a release position by actuation of at least one release button (18; 18a) arranged on the housing (7; 7a) or journal (8, 8a; 8b, 8c).

7. Folding headrest according to claim 6, **characterised in that**, for automatic transfer of the released headrest (3; 3a) to a non-working position, inside the housing (7; 7a) is arranged at least one torsion spring (19), preferably a leg spring, which is supported resiliently on the one hand on the journal (8, 8a; 8b, 8c) and on the other hand on the housing (7; 7a).

8. Folding headrest according to claim 6, **characterised in that** the bolt (13; 13b) is mounted axially slidably inside the housing (7; 7a), wherein at least one guide pin (20) of the bolt (13; 13a) is guided without play in a bore (21) on the journal (8, 8a).

9. Folding headrest according to any of claims 1 to 8, **characterised in that** inside the housing (7; 7a) are arranged two journals (8, 8a; 8b, 8c) which are each connected to a post (5 or 6), wherein at least one journal (8, 8a, 8b, 8c) non-rotatably receives the bolt (13; 13a).

10. Folding headrest according to any of claims 6 to 9, **characterised in that** on the housing (7; 7a), preferably approximately in the central region, is provided a wall (22) with an axial bore (23), wherein the wall (22) between the bore (23) and the casing of the housing (7) comprises at least one recess (17) for introduction of the bolt (13; 13a) on locking the headrest (3; 3a).

11. Folding headrest according to claim 6 or 7, **characterised in that** the bolt (13b) is arranged inside the housing (7a) so as to be slidable perpendicularly to the axis (24) of the housing (7a).

12. Folding headrest according to claim 1, **characterised in that** on the upper side (25) of the backrest (9) or on the structural member (10, 10a) connected to the body (1) is provided a depression (26) for embedding the pivot device (4a).

13. Folding headrest according to claim 12, **characterised in that** the depression (26) is closable by means of a covering portion (28) comprising openings for passage of the posts (5) and the release button (18a).

14. Folding headrest according to any of claims 6 to 11, **characterised in that** the headrest (3; 3a) is releasable from the locking position by means of a drive device acting on the bolt (13; 13a; 13b) or on the release button (18; 18a), for example a remote-controlled cable.

## Revendications

1. Appuie-tête rabattable, en particulier pour un siège de véhicule automobile pourvu d'un dossier, comportant une structure de support et un rembourrage qui entoure ladite structure de support, l'appui-tête
- pouvant être fixé au dossier ou à un élément situé dans la région du bord supérieur du dossier et lié à la carrosserie, au moyen d'au moins un montant de support,
- pouvant basculer vers l'avant et/ou vers l'arrière, autour d'un axe de pivotement sensiblement horizontal orienté dans la direction transversale du véhicule, au moyen d'un dispositif de pivotement,
- pouvant être verrouillé, au moins dans la position d'utilisation sensiblement verticale, au moyen d'un mécanisme de verrouillage,
- le dispositif de pivotement (4; 4a) étant disposé à l'extérieur de l'appuie-tête (3; 3a) et les montants de support (6) étant liés au dispositif de pivotement,
**caractérisé en ce que**
- le dispositif de pivotement (4; 4a) comporte un boîtier (7; 7a) en forme de manchon, avec au moins un axe (8; 8a; 8b; 8c) monté tournant dans celui-ci, le boîtier (7; 7a) ou l'axe (8; 8a; 8b; 8c) étant lié à la structure de support (30) de l'appuie-tête (3; 3a) par au moins un montant de support (5) supplémentaire et
- le mécanisme de verrouillage est disposé à l'intérieur du boîtier (7; 7a) et que, dans la position de verrouillage, le boîtier (7; 7a) est lié à l'axe (8; 8a; 8b; 8c).

2. Appuie-tête rabattable selon la revendication 1, **caractérisé en ce que** les montants de support (6) qui sont fixés d'un côté au boîtier (7; 7a) ou à l'axe (8; 8a; 8b; 8c),de l'autre côté, peuvent être reliés de manière séparable au dossier (9) ou à l'élément (10, 10a) lié à la carrosserie (1).

3. Appuie-tête rabattable selon la revendication 1, **caractérisé en ce que** les montants de support (5) qui sont fixés d'un côté au boîtier (7; 7a) ou à l'axe (8; 8a; 8b; 8c),de l'autre côté, sont fixés de manière séparable à la structure de support (30) de l'appuie-tête (3; 3a).

4. Appuie-tête rabattable selon une des revendications 1 à 3, **caractérisé en ce que** les montants de support (5 et 6) sont reliés à l'axe (8; 8a; 8b; 8c) par des moyens d'encliquetage connus en soi, par exemple par des doigts ou des rainures d'encliquetage ou de verrouillage.

5. Appuie-tête rabattable selon une des revendications 1 à 4, **caractérisé en ce que** les montants de support (5 et 6) sont conformées en tiges de support connues en soi qui peuvent être enfichées et fixées dans des guides en forme de manchons sur la structure de support (30) de l'appuie-tête( 3; 3a) et/ou sur le dossier (9) ou l'élément lié à la carrosserie (1).

6. Appuie-tête rabattable selon la revendication 1, **caractérisé en ce que** le mécanisme de verrouillage comprend un verrou (13; 13a; 13b) monté à l'intérieur du boîtier (7; 7a), coulissant à l'encontre de la force d'un ressort (12; 12a), lequel verrou est guidé dans une glissière (14; 14a) en forme de rainure dans l'axe (8; 8a; 8b; 8c) et porte des ergots de verrouillage (15) ou des bords de verrouillage (16; 16a) qui, dans la position verrouillée s'engagent par complémentarité de formes dans une échancrure (17; 17a) du boîtier (7; 7a) ou coopèrent avec une butée sur le boîtier (7; 7a), le verrou (13; 13a; 13b) pouvant être amené dans une position de déverrouillage par l'actionnement d'au moins un bouton de déverrouillage (18; 18a) prévu sur le boîtier (7; 7a) ou sur l'axe (8; 8a; 8b; 8c).

7. Appuie-tête rabattable selon la revendication 6, **caractérisé en ce que**, pour amener de manière automatique l'appuie-tête (3; 3a) déverrouillé dans une position de non-utilisation, au moins un ressort de torsion (19), de préférence un ressort à branches, est monté à l'intérieur du boîtier (7; 7a), lequel ressort prend appui élastiquement, d'un côté sur l'axe (8; 8a; 8b; 8c) et de l'autre sur le boîtier (7; 7a).

8. Appuie-tête rabattable selon la revendication 6, **caractérisé en ce que** le verrou (13; 13a) est monté coulissant dans la direction axiale à l'intérieur du boîtier (7; 7a), au moins téton de guidage (20) du verrou (13; 13a) étant guidé sans jeu dans un trou (21) dans l'axe (8, 8a).

9. Appuie-tête rabattable selon une des revendications 1 à 8, **caractérisé en ce que** deux axes (8; 8a; 8b; 8c) sont montés à l'intérieur du boîtier (7; 7a), lesquels axes sont reliés chacun à un montant de support (5 ou 6), au moins un axe (8; 8a; 8b; 8c) recevant le verrou (13; 13a) de manière fixe en rotation.

10. Appuie-tête rabattable selon une des revendications 6 à 9, **caractérisé en ce qu'**une paroi (22) avec un trou (23) axial est prévue sur le boîtier (7; 7a), de préférence dans la région médiane de celui-ci, la paroi (22) comportant entre le trou (23) et l'enveloppe du boîtier (7), au moins un évidement (17) pour l'engagement du verrou (13; 13a) lors du verrouillage de l'appuie-tête (3; 3a).

11. Appuie-tête rabattable selon la revendication 6 ou 7, **caractérisé en ce que** le verrou (13b) est monté dans le boîtier (7a) avec possibilité de coulissement perpendiculairement à l'axe (24) du boîtier (7a).

12. Appuie-tête rabattable selon la revendication 1, **caractérisé en ce qu'**un évidement (26) pour le logement du dispositif de pivotement (4a) est prévu dans la face supérieure (25) du dossier (9) ou dans l'élément (10; 10a) lié à la carrosserie (1).

13. Appuie-tête rabattable selon la revendication 12, **caractérisé en ce que** l'évidement (26) peut être fermé par un élément d'habillage (28) comportant des ouvertures de passage pour les montants de support (5) et le bouton de déverrouillage (18a).

14. Appuie-tête rabattable selon une des revendications 6 à 11, **caractérisé en ce que** l'appuie-tête (3, 3a) peut être déverrouillé à l'aide d'un dispositif d'entraînement, par exemple à l'aide d'un mécanisme à câble actionné à distance, agissant sur le verrou (13; 13a; 13b) ou sur le bouton de déverrouillage (18; 18a).
